(19) Europäisches Patentamt
European Patent Office
Office européen des brevets

(11) EP 2 759 783 A1

(12) **EUROPÄISCHE PATENTANMELDUNG**

(43) Veröffentlichungstag:
30.07.2014 Patentblatt 2014/31

(51) Int Cl.:
*F24J 2/48* (2006.01)

(21) Anmeldenummer: 14164288.4

(22) Anmeldetag: 05.11.2010

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR

(30) Priorität: 11.11.2009 DE 202009015334 U

(62) Dokumentnummer(n) der früheren Anmeldung(en)
nach Art. 76 EPÜ:
10778620.4 / 2 499 439

(71) Anmelder: Almeco GmbH
06406 Bernburg (DE)

(72) Erfinder: Dasbach, Reinhard
06406 Bernburg (DE)

(74) Vertreter: Olgemöller, Luitgard Maria
Lindenstraße 12a
81545 München (DE)

Bemerkungen:
Diese Anmeldung ist am 10-04-2014 als
Teilanmeldung zu der unter INID-Code 62 erwähnten
Anmeldung eingereicht worden.

(54) **Optisch wirksames Mehrschichtsystem für solare Absorption**

(57) Die Erfindung betrifft ein Verbundmaterial zur Verwendung als selektiver Solarabsorber mit eine Trägerschicht (1) aus Aluminium oder einer Aluminiumlegierung, wobei sich auf einer Seite (A) der Trägerschicht eine optisch wirksame Schicht (8) befindet, die die Reflexion des unbeschichteten Trägermaterials bei einer spezifischen Wellenlänge λ im Wellenlängenbereich zwischen 200nm und 10μm, bevorzugt zwischen 200 und 2500nm bei einer Einstrahlung unter einem spezifischen Inzidenzwinkel um mindestens 5% reduziert und die Reflexion des unbeschichteten Trägermaterials im Wellenlängenbereich zwischen 2,5μm und 50μm nicht mehr als 20%, vorzugsweise nicht mehr als 5%, reduziert. Das Verbundmaterial kann zusätzlich auf einer Seite (B) der Trägerschicht mindestens die folgenden Schichten aufweisen: eine Reflexionsschicht (3), eine Absorberschicht (5) und eine dielektrische und/oder oxidische Antireflexschicht (7), wobei sich zwischen der Absorberschicht (5) und der Reflexionsschicht (3) eine Schicht (4) aus einem Nitrid, einem Carbid oder einem Carbonitrid eines Metalls oder einer Mischung zweier oder mehrerer Metalle aus der IV., V., oder VI. Nebengruppe befindet und sich zwischen der Absorberschicht (5) und der dielektrischen Antireflexschicht (7) eine optisch aktive Schicht (6) aus einer Metallverbindung mit stöchiometrischer Zusammensetzung befindet.

Figur 2

EP 2 759 783 A1

**Beschreibung**

Die vorliegende Erfindung betrifft ein Verbundmaterial mit einem Träger, der in vielen Fällen aus Aluminium oder einer Aluminiumlegierung besteht. In einer ersten Ausführungsform ist der Träger auf mindestens einer Seite mit einem optisch wirksamen Mehrschichtsystem aus mindestens fünf Schichten versehen. In einer zweiten Ausführungsform ist der Träger rückseitig mit einer optisch wirksamen Schicht versehen, die die Reflexion des unbeschichteten Trägermaterials spezifisch beeinflusst, derart, dass das Fügen von Wärmeträgerrohren an das Verbundmaterial mit dem Laser effektiver und kostengünstiger wird. Ferner sind die optischen Parameter dieser optisch wirksamen Schicht so gewählt, dass sie hohe Reflexion des metallischen Trägermaterials im Infraroten unwesentlich reduziert und damit Wärmestrahlungsverluste beim Einsatz in einem Solarkollektor gering hält. Somit wird die Effektivität der Wärmeübertragung auf ein Wärmemedium verbessert. Bevorzugt werden beide Ausführungsformen miteinander kombiniert. die Effektivität der Wärmeübertragung auf ein Wärmemedium verbessert wird. Bevorzugt werden beide Ausführungsformen miteinander kombiniert. Das Verbundmaterial eignet sich insbesondere für den Einsatz in thermischen Solarkollektoren.

In thermischen Solarkollektoren besteht die Aufgabe, die einfallende Solarstrahlung (300 - 2500nm) bestmöglich zu absorbieren und in Wärme umzuwandeln. Um Verluste durch Infrarotstrahlung zu minimieren, muss die Reflexion eines dort eingesetzten Materials nach dem Kirchhoffschen Strahlungsgesetz und der Bedingung der Energieerhaltung im Wellenlängenbereich zwischen $2,5\mu m$ und $50\mu m$ möglichst hoch sein. Dies gilt sowohl für die der Solarstrahlung ausgesetzte Seite des Absorbers wie auch für die Rückseite. Daher ist es für die Nutzung in einem Solarkollektor ebenfalls wichtig, ein Material einzusetzen, das die Forderung einer hohen Reflexion im Wellenlängenbereich von $2,5\mu m$ bis $50\mu m$ auf beiden Seiten des eingesetzten Materials erfüllt.

Materialien für Solarkollektoren werden auch selektive Solarabsorber genannt. Ein Verbundmaterial, das diese optischen Eigenschaften aufweist, ist unter dem Namen TiNOX bekannt und in WO 95/17533 beschrieben. Bei dem TiNOX Material handelt es sich um ein sogenanntes Reflektor-Absorber Tandem (siehe z. B. "Solar Energy", "the state of the art" von Jeffrey Gordon, 2001 ISES). Die oben beschriebenen optischen Eigenschaften werden hierbei dadurch erreicht, dass auf einer im Wellenlängenbereich zwischen $2,5\mu m$ und $50\mu m$ hoch reflektierenden Oberfläche, vorzugsweise einem Metall wie Cu, Al, Mo, Au, Ag, Ta, Ni, Va, Fe oder deren Legierungen, eine Absorberschicht aufgebracht wird, die die Solarstrahlung möglichst effektiv absorbiert, aber im Bereich der Infrarotstrahlung weitgehend transparent ist. So wird die hohe Reflexion im Infraroten durch die darunter liegende hoch reflektierende Oberfläche erzielt.

Bei dem TiNOX Verbundmaterial wird als hoch reflektierende Oberfläche (T1) vorzugsweise ein metallisches Trägermaterial aus Cu oder Al verwendet, das die gewünschte hohe Reflexion im Wellenlängenbereich $2,5 - 50\mu m$ aufweist. In dem oben beschriebenen Patent wird aber auch auf die Möglichkeit hingewiesen, dass die hoch reflektierende Oberfläche durch die Beschichtung eines beliebigen (nicht optisch aktiven) Trägermaterials mit einem der oben genannten Metalle erzeugt werden kann. Somit ist das Trägermaterial selbst oder die auf das Trägermaterial aufgetragene hoch reflektierende metallische Beschichtung ein Teil des optischen Mehrschichtsystems.

Die auf der hoch reflektierenden Oberfläche (Spiegelschicht) aufgebrachte erste Schicht (T2), die sogenannte Absorberschicht, besteht im Falle von TiNOX vorzugsweise aus TiNxOy (mit x, y = 0,1 - 1,7). Die oberste Schicht (T3) ist eine sogenannte Entspiegelungs- oder Antireflexschicht. Diese Schicht besteht aus einem Metalloxid, vorzugsweise aus $SiO_2$, $ZrO_2$, $HfO_2$, $Al_2O_3$ oder $Y_2O_3$. Sie dient dazu, die Reflexion der Solarstrahlung an der Oberfläche des Verbundmaterials zu minimieren und somit die Absorption der Solarstrahlung im Verbundmaterial noch zu erhöhen.

In der Literatur wird eine Vielzahl weiterer, selektiver Absorber beschrieben, die auf dem Prinzip des Reflektor-Absorber Tandems beruhen. Dabei besteht die Absorberschicht in den meisten Fällen aus einer unterstöchiometrischen Metallverbindung oder aus sogenannten Cermets, bei denen Metallpartikel in einer dielektrischen Matrix verteilt sind. Als lichtabsorbierende Schicht auf der der Sonne zugewandten Seite wird heute neben dem oben erwähnten Titanoxynitrid auf einem Kupferträger häufig Chromoxid ($CrO_x$ mit einer zu Cr(III) unterstöchiometrischen Menge an Sauerstoff) bzw. ein "Cermet" aus Chrompartikeln in stöchiometrischem Chrom(III)oxid vorgeschlagen, siehe z.B. C.E. Kennedy, Review of Mid- to High-Temperature Solar Selective Absorber Materials, NREL (National Renewable Energy Laboratory), Technical Report July 2002 sowie darin zitierte Literatur von O.A. Panchenko et al. in Probl. At. Sci. Technol. Ser.: Plasma Phys., 132, (1999) 253 und in Int Conf. Coat. Glass, High-Perform. Coat. Transparent Syst. Large-Area High-Vol. Appl., Pulker H.K. et al., Elsevier Science, Amsterdam, 1999, S. 287. Auch gradierte Schichten sind im Stand der Technik diskutiert worden, siehe z.B. C. Nunes et al., Thin solid films 442 (2003) 173-178. W. Graf et al. schlugen in Journal of Non-Crystalline Solids 218 (1997) 380-387 eine angeblich gradierte Mischung aus Chromoxid und Chromnitrid vor, die ebenfalls in Form eines Cermet direkt auf eine Kupferunterlage gesputtert wurde. Diese Mischung wurde entwickelt, weil gradierte Chromoxidschichten kaum realisierbar seien. Es gebe nämlich scharfe Stabilitätsübergänge zwischen metallischem Chrom und Chromoxid, so dass schon kleine Veränderungen der Herstellungsbedingungen zur Abscheidung von Metall anstelle von Metalloxid und umgekehrt führten. Abhilfe schaffe der Zusatz von Stickstoff zur Sauerstoffatmosphäre, weil ein breiter Bereich verschiedener Stöchiometrie für die Nitride existiert. Diskutiert wird in dieser Veröffentlichung dann allerdings ein "Cermet mit einem kleinen Anteil von $CrN$ in $Cr_xO_y$" ohne Angabe einer Gradierung. Dieses sei ausreichend widerstandsfähig gegenüber Feuchtigkeit und Temperatur, den wichtigsten Umweltfaktoren für die Lebensdauer von Solarthermie-Kollektoren. Die Standard Testprozedur zur Ermittlung der Lebensdauer eines selektiven Solarabsorbers wird in M. Köhl, M. Heck, S. Brunold, U. Frei, B. Carlsson, K. Möller; "Advanced procedure for the assessment of the lifetime of solar absorber coatings"; Solar Energy Materials & Solar Cells 84 (2004) 275-289 beschrieben.

Allerdings haben unterstöchiometrische Schichten den Nachteil, dass sie beim Betrieb in einem Solarkollektor bis 230°C heiß werden können und dann die nicht abgesättigten Metallatome mit dem Luftsauerstoff reagieren und die Schichten somit mit der Zeit oxidischer werden (siehe z. B.: Holloway, P.H.; Shanker, K.; Pettit, R.B.; Sowell, R.R.: "Oxidation of electrodeposited black chrome selective solar absorber films"; Thin Solid Films, Vol. 72, S. 121-128, 1980). Die Absorptionsfähigkeit nimmt dabei ab. Daneben setzt ein Diffusionsvorgang der Metallatome aus der Spiegelschicht in die Absorberschicht ein (siehe z. B: Holloway, P.H.; Shanker, K.; Alexander, G.A.; de Sedas, L.: Oxidation and diffusion in black chrome selective solar absorber coatings, Thin Solid Films, Vol. 177, S. 95-105, 1989). Auch eine Oxidation der Spiegelschicht wird beobachtet. Daneben können Diffusionsvorgänge innerhalb der Absorberschicht zum Abbau des Gradienten führen (siehe z. B.: Christina Hildebrandt; "Hochtemperaturstabile Absorberschichten für linear konzentrierende solarthermische Kraftwerke" Dissertation 2009, Universität Stuttgart). Diese Vorgänge führen während einer durchschnittlichen Gebrauchsdauer des Solarkollektors von über 20 Jahren zu einer Veränderung (Verschlechterung) der optischen Eigenschaften des Verbundmaterials.

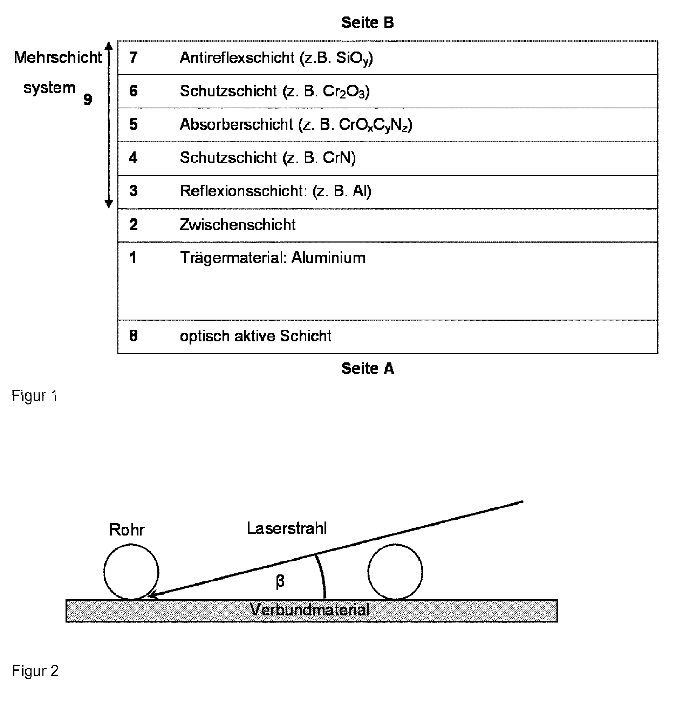

Daneben ist es für die Funktion eines Solarkollektors wichtig, die erzeugte Wärme effektiv an ein Wärmeträgermedium abzugeben. Dazu ist es üblich, auf der Rückseite des Materials Metallrohre (vorwiegend aus Kupfer, Edelstahl oder Aluminium) mit geeigneten Fügeverfahren zu fixieren. Durch die Rohre wird dann ein geeignetes Wärmeträgermedium (vorwiegend ein Wasser/Glykol-Gemisch oder ein Thermoöl) gepumpt, welches die Wärme an die gewünschte Abnahmestelle transportiert. Dabei kommt es darauf an, eine möglichst gute Wärmeleitung zwischen Material und Rohr zu erzielen. Für das Fügen von Aluminiumabsorbern an Rohre hat sich das Laserschweißen (siehe "Laserlicht trifft Sonnenlicht" von Dr. Ulrich Dürr, Mikroproduktion 3/2006, Carl Hanser Verlag München, S. 28) als besonders geeignet erwiesen. In den meisten Fällen werden dazu Nd-YAG Puls-Laser mit einer Laserwellenlänge von 1064nm eingesetzt. Aufgrund der hohen Reflexion einer unbehandelten Aluminiumoberfläche in diesem Wellenlängenbereich wird über 95% der zur Verfügung stehenden Strahlungsenergie reflektiert. Für den Schweißvorgang steht somit nur sehr wenig Energie zur Verfügung. Durch die Verwendung eines flachen Einstrahlwinkels β des Laserstrahls zwischen 10° - 20° kann die Reflexion bei 1064nm auf minimal 90% reduziert werden, siehe Figur 2, die die Einstrahlbedingungen beim Einsatz eines Lasers zum Verschweißen des Verbundmaterials mit Rohren zeigt. In Figur 2 ist das Reflexionsspektrum einer unbehandelten Aluminiumoberfläche unter einem senkrechten Einstrahlwinkel sowie einem Einstrahlwinkel von 10° eingezeichnet. Eine weitere Reduktion des Einstrahlwinkels kann aus produktionstechnischen Gründen nicht erfolgen, da der Laserstrahl durch die nebenstehenden Rohre, die üblicherweise einen Abstand von maximal 120mm besitzen, behindert wird. Somit ist der Einsatz von sehr leistungsstarken Lasern erforderlich. Daneben kann nur mit einer geringen Pulsfrequenz gearbeitet werden, was zu einer geringeren Produktivität oder einer geringen Punktdichte führt. Eine geringe Punktdichte führt zu einer geringeren Wärmeleitung zwischen Absorberplatte und Rohr, was im Falle eines Solarkollektors auf jeden Fall dessen Effektivität reduziert.

Zur Überwindung der voranstehenden Schwierigkeiten stellt die vorliegende Erfindung Lösungen bereit, die getrennt oder kombiniert realisiert werden können.

Das Trägermaterial des erfindungsgemäßen Verbundmaterials besteht aus Aluminium oder einer Aluminiumlegierung. Als Basis für das Schichtsystem auf der der Sonne zugewandten Seite kann stattdessen auch Kupfer oder Edelstahl dienen.

Unter Bezugnahme auf Figur 1 wird nachstehend zuerst das Schichtsystem der der Sonne zugewandte Seite B des Verbundmaterials beschrieben.

Es handelt sich dabei um ein optisch wirksames Mehrschichtsystem (9), welches aus mindestens 5 Schichten (3, 4, 5, 6, 7) besteht, wobei die oberste Schicht (7) eine dielektrische und/oder oxidische Schicht mit vorzugsweise der weiter unten angegebenen Zusammensetzung ist, die als Antireflexschicht dient und die unterste Schicht (3) des optisch wirksamen Systems aus einem Metall oder einer Metalllegierung mit einer integralen Reflexion im Wellenlängenbereich zwischen 2,5 und 50μm größer 80% besteht, vorzugsweise aus Al, Cu, Cr, Au, Ag, Ta, Ni, Va, Pt, Fe, Ti und/oder Mo und deren Legierungen. Besonders bevorzugt sind Al und Cu, bevorzugt sind aber auch Mo, Ni und Ag. Diese Schicht wird üblicherweise als Spiegelschicht bezeichnet. Zwischen der untersten Schicht (3) des optisch wirksamen Systems und dem Trägermaterial kann eine Zwischenschicht (2) eingefügt werden, um die Haftung des Mehrschichtsystems zu erhöhen und/oder eine Metalldiffusion aus dem Trägermaterial in das Mehrschichtsystem zu unterdrücken. Dabei kann es sich beispielsweise um einen Lack oder eine Haftschicht handeln, die die Haftung der Metallschicht auf dem metallischen Substrat verbessert. Diese Schicht kann jedoch entfallen, wenn die Verbindung der Schicht (3) mit dem Substrat ausreichend ist. Die mittlere Schicht (5) ist die eigentliche Absorberschicht des Systems; es handelt sich dabei um eine substöchiometrische Metallverbindung des Sauerstoffs und/oder des Stickstoffs und/oder des Kohlenstoffs der Zusammensetzung $Me_rAl_sN_xO_yC_z$, wobei Me ein Metall aus der IV Nebengruppe, z.B. Ti, oder Cr ist und die Indizes r und s das Verhältnis zwischen dem Metall und Al beschreiben (für s+r = 2 kann s einen beliebigen Wert zwischen 0 und 1,9 annehmen) während die Indizes x, y und z ein nichtstöchiometrisches Verhältnis in den Oxiden, Nitriden und/oder Carbiden bezeichnen, mit der Maßgabe, dass die Summe von x+y+z eine Unterstöchiometrie der Anionen gegenüber den Kationen angibt. Zwischen der Schicht (5) und der Schicht (7) befindet sich eine oxidisch abgesättigte (stöchiometrische) metalloxidische Schicht (6) des Aluminiums oder eines Metalls aus der IV. oder V. oder VI. Nebengruppe, z. B. $Cr_2O_3$ oder $Al_2O_3$, während sich zwischen der Schicht (5) und der Schicht (3) eine metallnitridische und/oder -carbidische Schicht (4) befindet, bei der es sich um ein Nitrid, Carbonitrid oder Carbid eines Metalls aus der IV. oder V. oder VI. Nebengruppe handelt, z. B. CrN oder TiC. Die oberste Schicht (7) des optisch wirksamen Mehrschichtsystems ist eine dielektrische Schicht, die einen Brechungsindex zwischen 1,3 und 2,4, vorzugsweise zwischen 1,3 und 2,2 aufweist, besonders bevorzugt mit der Zusammensetzung $MeO_vN_w$, wobei die Indizes v, w ein stöchiometrisches oder nichtstöchiometrisches Verhältnis in den Oxiden und Nitriden bezeichnen. Als Metall Me können dabei Si, Zn, Sn, Zr, Hf, Cr, Al, Y oder Bi eingesetzt werden. Alternativ können auch Fluoride eingesetzt werden.

Die beiden Schichten, die sich unterhalb bzw. oberhalb der Schicht (5) befinden, sind zu deren Schutz vorgesehen; sie unterdrücken die oben beschriebenen Alterungsvorgänge. Dabei dient das Metallnitrid oder -carbid der unteren Schicht (4) als Barriere, um die Diffusion von Metallatomen aus der Spiegelschicht (3), gegebenenfalls sogar aus dem Trägermaterial (1) zu unterdrücken. Ferner dient sie als Schutzschicht vor einem oxidativen Angriff der Spiegelschicht. Die Schicht (6) oberhalb der Schicht (5) ist eine oxidisch abgesättigte (stöchiometrische) metalloxidische Schicht, die unter Temperatureinwirkung nicht weiter mit Luftsauerstoff reagieren kann. Sie dient als Schutzschicht gegen einen oxidischen Angriff der Schicht (5).

Das erfindungsgemäße optisch wirksame Mehrschichtsystem absorbiert mehr als 80% der Solarstrahlung unter AM 1,5 Bedingungen und weist im Bereich der Infrarotstrahlung zwischen 2,5$\mu$m und 50$\mu$m eine integrale Reflexion größer als 80% auf.

Damit ist das erfindungsgemäße Mehrschichtsystem (9) aus mindestens 5 Schichten oxidationsbeständiger und temperaturstabiler als ein Mehrschichtsystem aus 3 Schichten, das die gleichen optischen Anforderungen erfüllt.

In bevorzugten Ausführungsformen besteht die Absorberschicht 5 aus einem Titanaluminiumcarboxynitrid, einem Cromoxynitrid insbesondere der Zusammensetzung $CrO_xN_y$ mit x = 1,0-1,4 und y = 0,02-0,4, oder einem Cromcarboxynitrid.

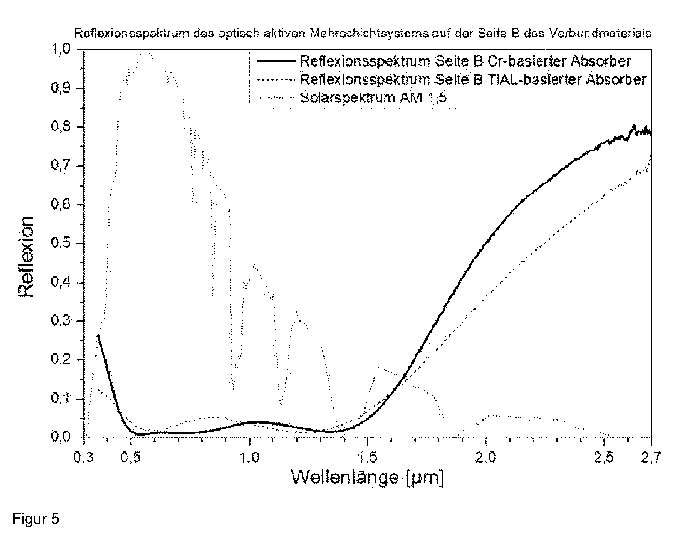

Die Reflexionsspektren zweier Ausführungsformen des erfindungsgemäßen Mehrschichtsystems sind in Figur 5 dargestellt. In einem Fall ist die Absorberschicht (5) ein unterstöchiometrisches Chromoxynitrid der Formel $CrO_xN_y$ mit x = 1,2-1,3 und y = 0,1-0,2, in anderem Fall ein Titanaluminiumcarboxynitrid der Formel $Ti_rAl_sO_xN_yC_z$ mit r = 1, s = 1, x = 1,2-1,4, y = 0,02-0,1 und z = 0,2-0,3, d.h. eine ebenfalls unterstöchiometrische Zusammensetzung.

Die rückseitige, der Sonne abgewandte Seite A des erfindungsgemäßen Mehrschichtsystems kann unbeschichtet bleiben; alternativ kann diese Seite ebenfalls beschichtet sein.

In einer Ausgestaltung der Erfindung, die sowohl mit dem oben erwähnten Schichtsystem der Vorderseite (B) kombinierbar ist als auch unabhängig davon realisiert werden kann, kann die Rückseite eine optisch wirksame Schicht aufweisen, die die Reflexion des unbeschichteten Trägermaterials bei einer spezifischen Wellenlänge $\lambda$ im Wellenlängenbereich zwischen 200nm und 10$\mu$m, bevorzugt zwischen 200 und 2500nm bei einer Einstrahlung unter einem spezifischen Inzidenzwinkel um mindestens 5% reduziert und die integrale Reflexion des unbeschichteten Trägermaterials im Wellenlängenbereich zwischen 2,5$\mu$m und 50$\mu$m nicht mehr als 20%, vorzugsweise nicht mehr als 10% und besonders bevorzugt nicht mehr als 5%, reduziert.

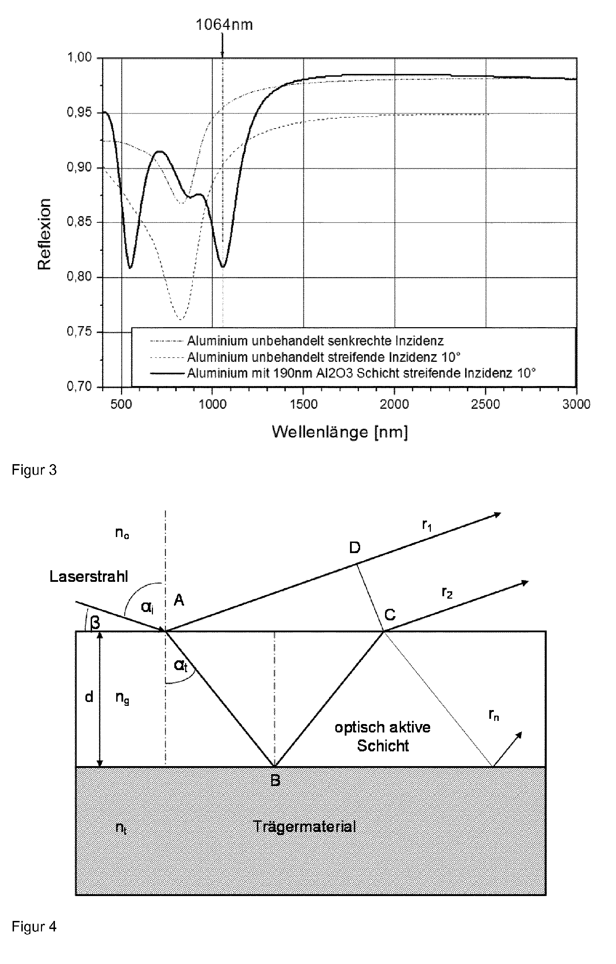

Durch die erfindungsgemäß vorgeschlagene Rückseite des Verbundmaterials wird die Effektivität der Wärmeübertragung auf das durch die Rohre fließende Wärmemedium stark erhöht. Dies wird dadurch bewirkt, dass die Reflexion der Aluminiumoberfläche durch die auf die Rückseite aufgebrachte optisch wirksame Schicht reduziert wird, so dass weniger Laserstrahlungsenergie verloren geht. In Figur 3 ist das Reflexionsspektrum einer mit einer 190nm dicken $Al_2O_3$ Schicht versehenen Aluminiumoberfläche unter einem Einstrahlwinkel $\beta$ = 10° eingezeichnet. Man erkennt, dass in diesem besonders bevorzugten Fall die Reflexion für 1064nm auf unter 82% reduziert werden kann. Somit kann entweder die Punktdichte oder die Produktivität erhöht werden. Durch die besonderen Eigenschaften der optisch wirksamen Schicht der vorliegenden Erfindung wird die Reflexion im Bereich der Wärmestrahlung jedoch nicht oder nur minimal reduziert, so dass Wärmestrahlungsverluste beim Einsatz in einem Solarkollektor vermieden werden.

Um die Reflexion bei der verwendeten Laserwellenlänge möglichst effizient zu reduzieren, wird die Schichtdicke der optisch aktiven Schicht so gewählt, dass eine destruktive Interferenz der reflektierenden Strahlen erreicht wird. Bedingung dafür ist, dass ein Phasenunterschied von einem ungradzahligen Vielfachen von $\pi$ zwischen dem primär an der Oberfläche der optisch aktiven Schicht reflektierten Strahl und den Strahlen erzeugt wird, die erst durch die optisch aktive Schicht laufen und danach wieder an der Oberfläche der optisch aktiven Schicht austreten.

Betrachtet man einen Strahl mit der Laserwellenlänge $\lambda$, der unter dem Inzidenzwinkel $\alpha_i$ ($\alpha_i+\beta$ = 90°) auf das Verbundmaterial auftrifft (siehe Figur 4, die eine Skizze zur Verdeutlichung des Strahlenganges eines auf das Verbundmaterial unter einem Einstrahlwinkel $\beta$ bzw. Inzidenzwinkel $\alpha_i$ ($\alpha_i+\beta$ = 90°) eingestrahlten und reflektierten Laserstrahls zeigt), wird dieser teilweise an der Oberfläche der optisch aktiven Schicht reflektiert (r1) und teilweise läuft er durch die Schicht und wird dann an der unteren Grenzfläche zwischen der optisch aktiven Schicht und dem Aluminium Trägermaterial ebenfalls teilweise reflektiert (r2). Sowohl der im Punkt A wie der in Punkt B reflektierte Strahl erfährt einen Phasensprung von $\pi$. Somit kompensieren sich beide Phasensprünge für die reflektierten Strahlen r1 und r2. Damit zwischen den Wellenfronten der reflektierten Strahlen r1 und r2 ein Phasenunterschied von $\pi$ auftritt, muss die Differenz zwischen der optischen Weglänge (AD), die der Strahl r1 zurücklegt, und der optischen Weglänge (ABC) des durch die optisch aktive Schicht laufenden Strahls r2 ein ungerades Vielfaches von $\lambda$ / 2 sein.

Es kann gezeigt werden, dass der Anteil des Strahls, der im Punkt C wieder in die optisch aktive Schicht reflektiert wird und erst nach mehreren internen Reflexionen ($r_n$) aus der Oberfläche der optisch aktiven Schicht austritt, die gleiche Phasenlage wie der Strahl $r_2$ besitzt. Daher reicht es zur Herleitung der optimalen Schichtdicke, nur die Strahlen r1 und r2 zu betrachten.

Die optische Weglängendifferenz $\Delta$ für die ersten beiden reflektierten Strahlen r1 und r2, gegeben durch (dabei sind $n_0$, $n_g$, $n_t$ die Brechungsindizes der Luft, der optisch aktiven Schicht und des Trägermediums):

$$\Delta = n_g\left[(\overline{AB})+(\overline{BC})\right] - n_0(\overline{AD})$$

mit

$$(\overline{AB}) = (\overline{BC}) = d / \cos \alpha_t$$

ergibt sich als

$$\Delta = \frac{2n_g d}{\cos \alpha_t} - n_0(\overline{AD})$$

mit

$$(\overline{AD}) = (\overline{AC})\sin \alpha_i$$

Über das Snelliusche Brechungsgesetz sind die Winkel $\alpha_i$ und $\alpha_t$ verknüpft, so dass sich folgende Beziehung ergibt:

$$(\overline{AD}) = (\overline{AC})\frac{n_g}{n_0}\sin \alpha_t$$

Weiter gilt

$$(\overline{AC}) = 2d \tan \alpha_t$$

Und somit erhält man nach einigen trigeometrischen Umformungen für die optische Wegdifferenz:

$$\Delta = 2n_g d \cos \alpha_t$$

Die Phasendifferenz $\delta$ der beiden Strahlen r1 und r2 ist nun gegeben durch

$$\delta = \frac{2\pi}{\lambda}\Delta = \frac{4\pi n_g}{\lambda}d \cos \alpha_t$$

Eine maximale Schwächung der Reflexion erhält man für $\delta$ = $\pi$.

$$\pi = \frac{4\pi n_g}{\lambda}d \cos \alpha_t$$

Löst man diese Formel nach d auf und ersetzt den Winkel $\alpha_t$ durch den Einfallswinkel $\alpha_i$, so erhält man für die optimale Schichtdicke der optisch aktiven Schicht folgende Beziehung:

$$d = \frac{\lambda}{4n_g}\left(1 - \frac{n_0^2}{n_g^2}\sin^2 \alpha_i\right)^{-\frac{1}{2}}$$

Mit dieser Formel ist es möglich, die Schichtdicke d einer optisch aktiven Schicht jeweils auf die verwendete Laserwellenlänge $\lambda$ und den verwendeten Inzidenzwinkel $\alpha_i$ (in der Regel zwischen 70° und 80°) des Laserstrahls anzupassen. Somit ist eine auf den Anwendungsfall maßgeschneiderte Anpassung des Verbundmaterials möglich, da die jeweiligen Laserstrahlen-Wellenlängen bekannt sind (sie reichen von etwa 200 nm bis etwa 10 $\mu$m).

Die maximal erreichbare Reduktion der Reflexion kann mit Hilfe der Fresnelschen Gleichungen berechnet werden. Die Reflexionsspektren in Figur 4 wurden mit Hilfe einer aus den Fresnel Gleichungen abgeleiteten Matrixmethode berechnet, siehe z. B. E. Hecht "Optik", Verlag Oldenburg 2001.

Des Weiteren kann die optisch wirksame Schicht (8) auf der Seite A so ausgeführt sein, dass sie gleichzeitig als Korrosionsschutz für das verwendete Trägermaterial dient. Somit kann verhindert werden, dass die Reflexion der Rückseite des Trägermaterials durch Korrosion reduziert wird. Damit ist gewährleistet, dass die Verluste durch Infrarotstrahlung auch während eines langfristigen Einsatzes des Verbundmaterials in einem Solarkollektor niedrig bleiben.

Besonders bevorzugte Materialien für die Schicht (8) sind dieselben, die auch für die Antireflexschicht (7) auf der Vorderseite verwendet werden, z.B. Aluminiumoxid oder Siliciumdioxid. Besonders bevorzugt kann eine Aluminiumoxid-Schicht durch elektrochemisches Anodisieren des Aluminium-Trägermaterials aufgebracht werden.

Das erfindungsgemäße Verbundmaterial zeichnet sich gegenüber bisher in Solarkollektoren eingesetzten Verbundmaterialien dadurch aus, dass die auf der Seite A des Trägermediums aufgebrachte optisch aktive Schicht (8) das Fügen von Wärmeträgerrohren an das Verbundmaterial mit dem Laser effektiver und kostengünstiger macht. Ferner sind die optischen Parameter dieser Schicht (8) so gewählt, dass sie hohe Reflexion des metallischen Trägermaterials im Infraroten unwesentlich reduziert und damit Wärmestrahlungsverluste beim Einsatz in einem Solarkollektor gering hält. Die Schicht (8) kann dabei so ausgestaltet sein, dass sie die Korrosion der metallischen Rückseite verhindert, so dass die Reflexion auch bei längerem Gebrauch des Verbundmaterials in einem Solarkollektor nicht wesentlich abnimmt. So bleiben die Wärmestrahlungsverluste gering. Das optisch aktive Mehrschichtsystem auf der Seite (B) zeichnet sich durch eine besonders hohe Temperaturstabilität aus, die durch die Verwendung von chemisch abgesättigten Schutzschichten erreicht wird, die Bestandteil des optisch aktiven Zwischensystems sind.

Das Verbundmaterial der Erfindung kann auf konventionellem Wege hergestellt werden. Zur Abscheidung der erfindungsgemäßen Absorberschichten können z.B. kommerzielle PVD-Verfahren, aber z.B. auch CVD- oder PECVD-Verfahren eingesetzt werden. Dabei wird das Metallband (Trägermaterial) in einer Vakuumkammer mittels eines Wickelmechanismus mit einer konstanten Bandgeschwindigkeit über verschiedene PVD Beschichtungsstationen bewegt, so dass die einzelnen Schichten des beschriebenen Mehrschichtsystems auf der Seite B des Trägermaterials sukzessive aufgetragen werden können.

Dabei kann das Metallband als Rolle vor dem Beschichtungsprozess in die Vakuumkammer eingebracht, beschichtet und nach der Beschichtung wieder entnommen werden (Batch Prozess) oder über ein Vakuumschleusensystem von Atmosphäre ins Vakuum eingeführt, beschichtet und über ein zweites Vakuumschleusensystem wieder in die Atmosphäre geführt werden (Air to Air Prozess).

Bevorzugt durchläuft das Metallband vor der Beschichtung eine oder mehrere Plasmareinigungsstationen, um Oberflächenkontaminationen des Metallsubstrats zu entfernen (z. B. Wasser, Öle, Fette, Oxide), und so eine gute Haftung des Mehrschichtsystems zu gewährleisten.

Bei den PVD Verfahren können z. B. Magnetronsputtern, Gasflusssputtern, Ionenstrahlsputtern, Elektronenstrahlverdampfung, thermische Verdampfung oder ARC-Verdampfung eingesetzt werden. Dabei kann zum Aufbringen der einzelnen Schichten des Mehrschichtsystems nur ein spezifisches PVD-Verfahren eingesetzt werden. Da sich für die Abscheidung von verschiedenen Materialien meist ein PVD-Verfahren besonders gut eignet, können aber auch verschiedenen PVD-Verfahren gleichzeitig zum Einsatz kommen.

Zur Abscheidung von Oxiden, Nitriden und oder Carbiden wird meist ein reaktives PVD Verfahren verwendet. Dabei wird mittels eines der beschriebenen Verfahren ein Metall abgeschieden und über ein Gasverteilungssystem mit einer definierten Flussrate Sauerstoff und/oder Stickstoff und/oder ein kohlenstoffhaltiges Gas in die PVD Kammer eingelassen, so dass das Metall zu der gewünschten Verbindung reagiert.

Die Schichtdicke der einzelnen Schichten kann entweder über die Bandgeschwindigkeit oder die eingebrachte Leistung in den einzelnen PVD-Beschichtungsstationen in bekannter Weise gesteuert werden. Dabei kann die Abscheidungsrate durch verschiedene Verfahren kontrolliert und gesteuert werden. Industriell werden dazu Reflektrometrie, Ellipsometrie, Schwingquarzverfahren oder Röntgenfluoreszenz-Verfahren u. a. benutzt.

Die optisch aktive Schicht auf der Seite A des Trägermaterials kann durch eines der oben beschriebenen PVD (auch CVD und PECVD) Verfahren aufgebracht werden. Besonders bevorzugt kann eine Aluminiumoxid-Schicht durch elektrochemisches Anodisieren von Aluminiumblech aufgebracht werden.

**Ausführungsbeispiel:**

Als Trägermaterial wird 0,3 bis 0,5mm dickes Aluminiumblech (Aluminium 99,5% - 99,8% Reinheit) verwendet, auf das in einem elektrochemischen Anodisierungsprozess eine 100 bis 200 nm (besonders bevorzugt 190nm) dicke Aluminiumoxidschicht aufgebracht wird. Dabei wird das Aluminiumblech sowohl auf der Seite A wie auf der Seite B mit einer Aluminiumoxidschicht überzogen. Auf der Seite A bildet die Aluminiumoxidschicht die optisch aktive Schicht 8 und auf der Seite B die Zwischenschicht 2.

Dieses elektrochemisch anodisierte Aluminiumband wird anschließend mit einer kommerziellen Air to Air Bandbeschichtungsanlage beschichtet. (Solche Bandbeschichtungsanlagen sind zum Beispiel in der Buchreihe "Vakuumbeschichtung" Band 5 Seiten 187 - 199 vom VDI Verlag 1993, Herausgeber Gerhard Kienel beschrieben).

Dabei läuft das Aluminiumband in die Vakuumkammer über mehrere Bandschleusen ein, und durchläuft dann mehrere Plasmareinigungsstationen. Anschließend wird das Band durch mehrere Magnetronsputterstationen geführt, die durch Flachschleusen voneinander getrennt sind.

In der ersten Sputterstation wird eine Aluminiumschicht aufgesputtert, die die Reflexionsschicht 3 bildet.

In der darauffolgenden Sputterstation wird eine CrN-Schicht durch reaktives Sputtern von Chrom unter einer definierten Zugabe von Stickstoff abgeschieden, die die Schutzschicht 4 bildet.

In der nächsten Sputterstation wird durch reaktives Sputtern von Chrom unter definierter Zugabe eines Sauerstoff-Stickstoffgemisches eine unterstöchiometrische $CrO_xN_y$ abgeschieden, die die Absorberschicht 5 bildet.

In der letzten Sputterstation wird eine $Cr_2O_3$-Schicht durch reaktives Sputtern von Chrom unter einer definierten Zugabe von Sauerstoff abgeschieden, die die Schutzschicht 6 bildet.

Die Sputterprozesse laufen in einem Druckbereich von 1e-3 bis 5e-3 mbar ab. Als Sputtergas wird Argon verwendet.

Nach Durchlaufen einer weiteren Flachschleuse gelangt das Band in eine Elektronenstrahlverdampferkammer. Hier wird $SiO_2$ mittels Elektronenstrahltechnologie verdampft. Dabei wird definiert Sauerstoff eingelassen, so dass sich ein Arbeitsdruck im Bereich von 1 e-4 bis 5e-4mbar einstellt. Die hier aufgebrachte $SiO_2$ Schicht bildet die Antireflexschicht 7 des Mehrschichtsystems.

Die Schichtdicken der einzelnen Schichten des Mehrfachschichtsystems werden über ein Ellipsometersystem erfasst und geregelt.

Anschließend wird das Band durch eine mehrstufige Bandschleuse wieder in die Atmosphäre geführt und dort aufgewickelt.

Die Anmeldung offenbart neben der beanspruchten Erfindung auch die folgende:

A. Ein Verbundmaterial zur Verwendung als selektiver Solarabsorber, umfassend eine Trägerschicht (1) aus Aluminium, einer Aluminiumlegierung, Kupfer oder Edelstahl, wobei sich auf einer Seite (B) der Trägerschicht mindestens die folgenden Schichten befinden:

- eine Reflexionsschicht (3) aus einem Metall oder einer Metalllegierung mit einer integralen Reflexion im Wellenlängenbereich zwischen 2,5 und 50 $\mu$m größer 80%,
- eine Absorberschicht (5) aus einer hinsichtlich der Summe der Anionen substöchiometrischen Metallverbindung des Sauerstoffs und/oder des Stickstoffs und/oder des Kohlenstoffs, wobei das Metall ausgewählt ist unter den Metallen der IV. Nebengruppe, Chrom sowie einer Kombination eines Metalls der IV. Nebengruppe mit Aluminium oder von Chrom mit Aluminium, wobei das Aluminium jeweils in einem Anteil von maximal 95 At.-%, bezogen auf die Gesamtmenge an Metall, vorhanden ist, wobei sich die Absorberschicht oberhalb der Reflexionsschicht (3) befindet,
- eine dielektrische und/oder oxidische Antireflexschicht (7) mit einer stöchiometrischen oder nicht-stöchiometrischen Zusammensetzung mit einem Brechungsindex zwischen 1,3 und 2,4, die sich oberhalb der Absorberschicht (5) befindet,

dadurch gekennzeichnet, dass sich zwischen der Absorberschicht (5) und der Reflexionsschicht (3) eine Schicht (4) aus einem Nitrid, einem Carbid oder einem Carbonitrid eines Metalls oder einer Mischung zweier oder mehrerer Metalle aus der IV., V., oder VI. Nebengruppe befindet und sich zwischen der Absorberschicht (5) und der dielektrischen Antireflexschicht (7) eine optisch aktive Schicht (6) aus einer Metallverbindung mit stöchiometrischer Zusammensetzung befindet.

B. Ein Verbundmaterial wie in Punkt A definiert, dadurch gekennzeichnet, dass sich zwischen der Trägerschicht (1) und der Reflexionsschicht (3) eine Zwischenschicht (2) befindet.

C. Ein Verbundmaterial wie in Punkt A oder in Punkt B definiert, dadurch gekennzeichnet, dass die Reflexionsschicht (3) aus einem Metall, ausgewählt unter Al, Cu, Cr, Au, Ag, Ta, Ni, Va, Pt, Fe, Ti und Mo sowie Legierungen von zweien oder mehr dieser Metalle, besteht, bevorzugt aus Al oder Cu.

D. Ein Verbundmaterial wie in einem der vorstehenden Punkte definiert, dadurch gekennzeichnet, dass die Schicht (4) ein Chromcarbid, ein Chromnitrid oder ein Chromcarbonitrid ist.

E. Ein Verbundmaterial wie in einem der vorstehenden Punkte definiert, dadurch gekennzeichnet, dass die Schicht (5) die Zusammensetzung $CrO_xC_yN_z$ oder $Ti_rAl_sN_xO_yC_z$ besitzt, wobei r+s = 2 ist, s = 0 - 1,9 sein kann und die Indices x, y und z so gewählt sind, dass die Metallverbindung hinsichtlich ihrer Anionen unterstöchiometrisch ist.

F. Ein Verbundmaterial wie in einem der vorstehenden Punkte definiert, dadurch gekennzeichnet, dass die Schicht (6) eine metalloxidische Schicht eines Metalls aus der IV., V. oder VI. Nebengruppe oder des Aluminiums ist.

G. Ein Verbundmaterial wie in einem der vorstehenden Punkte definiert, dadurch gekennzeichnet, dass die Schicht (7) aus einem Oxid, Nitrid oder Oxynitrid eines Metalls oder von Silicium besteht.

H. Ein Verbundmaterial wie in einem der vorstehenden Punkte definiert, dadurch gekennzeichnet, dass die Schicht (7) die äußerste Schicht auf der genannten Seite ist.

## Patentansprüche

1. Verbundmaterial zur Verwendung als selektiver Solarabsorber, umfassend eine Trägerschicht (1) aus Aluminium oder einer Aluminiumlegierung, wobei sich auf einer Seite (A) der Trägerschicht eine optisch wirksame Schicht (8) befindet, die die Reflexion des unbeschichteten Trägermaterials bei einer spezifischen Wellenlänge $\lambda$ im Wellenlängenbereich zwischen 200nm und 10$\mu$m, bevorzugt zwischen 200 und 2500nm bei einer Einstrahlung unter einem spezifischen Inzidenzwinkel um mindestens 5% reduziert und die Reflexion des unbeschichteten Trägermaterials im Wellenlängenbereich zwischen 2,5$\mu$m und 50$\mu$m nicht mehr als 20%, vorzugsweise nicht mehr als 5%, reduziert.

2. Verbundmaterial nach Anspruch 1, worin die Schichtdicke der Schicht (8) der Formel

$$d = \frac{\lambda}{4n_g}\left(1 - \frac{n_0^2}{n_g^2}\sin^2\alpha_i\right)^{-\frac{1}{2}}$$

gehorcht, wobei $\lambda$ zwischen 200nm und 10 $\mu$m bedeutet und $\alpha_i$ ein Winkel zwischen 0° und 80° ist.

3. Verbundmaterial nach Anspruch 1 oder Anspruch 2, worin $\lambda$ = 1064 nm ist.

4. Verbundmaterial nach Anspruch 2 oder 3, worin $\alpha_i$ ein Winkel zwischen 70° und 80° ist.

5. Verbundmaterial nach einem der Ansprüche 1 bis 4, **dadurch gekennzeichnet, dass** die Schicht (8) aus einem Oxid, Nitrid oder Oxynitrid eines Metalls, insbesondere des Aluminiums oder Siliciums, besteht.

6. Verbundmaterial nach einem der Ansprüche 1 bis 5, **dadurch gekennzeichnet, dass** sich auf einer der Seite (A) der Trägerschicht abgewandten Seite (B) mindestens die folgenden Schichten befinden:

   - eine Reflexionsschicht (3) aus einem Metall oder einer Metalllegierung mit einer integralen Reflexion im Wellenlängenbereich zwischen 2,5 und 50 $\mu$m größer 80%,
   - eine Absorberschicht (5) aus einer hinsichtlich der Summe der Anionen substöchiometrischen Metallverbindung des Sauerstoffs und/oder des Stickstoffs und/oder des Kohlenstoffs, wobei das Metall ausgewählt ist unter den Metallen der IV. Nebengruppe, Chrom sowie einer Kombination eines Metalls der IV. Nebengruppe mit Aluminium oder von Chrom mit Aluminium, wobei das Aluminium jeweils in einem Anteil von maximal 95 At.-%, bezogen auf die Gesamtmenge an Metall, vorhanden ist, wobei sich die Absorberschicht oberhalb der Reflexionsschicht (3) befindet,
   - eine dielektrische und/oder oxidische Antireflexschicht (7) mit einer stöchiometrischen oder nicht-stöchiometrischen Zusammensetzung mit einem Brechungsindex zwischen 1,3 und 2,4, die sich oberhalb der Absorberschicht (5) befindet,

   **dadurch gekennzeichnet, dass** sich zwischen der Absorberschicht (5) und der Reflexionsschicht (3) eine Schicht (4) aus einem Nitrid, einem Carbid oder einem Carbonitrid eines Metalls oder einer Mischung zweier oder mehrerer Metalle der IV., V., oder VI. Nebengruppe befindet und sich zwischen der Absorberschicht (5) und der dielektrischen Antireflexschicht (7) eine optisch aktive Schicht (6) aus einer Metallverbindung mit stöchiometrischer Zusammensetzung befindet.

7. Verbundmaterial nach Anspruch 6, **dadurch gekennzeichnet, dass** sich zwischen der Trägerschicht (1) und der Reflexionsschicht (3) eine Zwischenschicht (2) befindet.

8. Verbundmaterial nach Anspruch 6 oder Anspruch 7, **dadurch gekennzeichnet, dass** die Reflexionsschicht (3) aus einem Metall ausgewählt unter Al, Cu, Cr, Au, Ag, Ta, Ni, Va, Pt, Fe, Ti und Mo sowie Legierungen von zweien oder mehr dieser Metalle, besteht, bevorzugt aus Al oder Cu.

9. Verbundmaterial nach einem der Ansprüche 6 bis 8, **dadurch gekennzeichnet, dass** die Schicht (4) ein Chromcarbid, ein Chromnitrid oder ein Chromcarbonitrid ist.

10. Verbundmaterial nach einem der Ansprüche 6 bis 9, **dadurch gekennzeichnet, dass** die Schicht (5) die Zusammensetzung $CrO_xC_yN_z$ oder $TirAl_sN_xO_yC_z$ besitzt, wobei r+s = 2 ist, s = 0 - 1,9 sein kann und die Indices x, y und z so gewählt sind, dass die Metallverbindung hinsichtlich ihrer Anionen unterstöchiometrisch ist.

11. Verbundmaterial nach einem der Ansprüche 6 bis 10, **dadurch gekennzeichnet, dass** die Schicht (6) eine metalloxidische Schicht eines Metalls aus der IV., V. oder VI. Nebengruppe oder des Aluminiums ist.

12. Verbundmaterial nach einem der Ansprüche 6 bis 11, **dadurch gekennzeichnet, dass** die Schicht (7) aus einem Oxid, Nitrid oder Oxynitrid eines Metalls oder von Silicium besteht.

13. Verbundmaterial nach einem der Ansprüche 6 bis 12, **dadurch gekennzeichnet, dass** die Schicht (7) die äußerste Schicht auf der genannten Seite ist.

**Seite B**

Mehrschicht
system 9

| 7 | Antireflexschicht (z.B. $SiO_y$) |
|---|---|
| 6 | Schutzschicht (z. B. $Cr_2O_3$) |
| 5 | Absorberschicht (z. B. $CrO_xC_yN_z$) |
| 4 | Schutzschicht (z. B. CrN) |
| 3 | Reflexionsschicht: (z. B. Al) |
| 2 | Zwischenschicht |
| 1 | Trägermaterial: Aluminium |
| 8 | optisch aktive Schicht |

**Seite A**

Figur 1

Rohr        Laserstrahl

β

Verbundmaterial

Figur 2

1064nm

Figur 3

Figur 4

Reflexionsspektrum des optisch aktiven Mehrschichtsystems auf der Seite B des Verbundmaterials

Legend:
- Reflexionsspektrum Seite B Cr-basierter Absorber
- Reflexionsspektrum Seite B TiAL-basierter Absorber
- Solarspektrum AM 1,5

Y-axis: Reflexion
X-axis: Wellenlänge [µm]

Figur 5

Europäisches Patentamt
European Patent Office
Office européen des brevets

**EUROPÄISCHER RECHERCHENBERICHT**

Nummer der Anmeldung

EP 14 16 4288

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 097 311 A (ISHIBASHI TOSHIHIRO ET AL) 27. Juni 1978 (1978-06-27) * Spalte 1, Zeile 5 - Spalte 2, Zeile 36 * * Spalte 8, Zeile 39 - Spalte 9, Zeile 3 * * Anspruch 1; Abbildungen * | 1-5 | INV. F24J2/48 |
| X | WO 96/02798 A1 (EISENHAMMER THOMAS [DE]; LAZAROV MILADIN P [DE]) 1. Februar 1996 (1996-02-01) * Seite 9, Zeile 24 - Seite 12, Zeile 2; Abbildungen * | 1-3 | |
| X | WO 2006/072433 A1 (LINK ANDREAS [DE]) 13. Juli 2006 (2006-07-13) * Seite 5, Zeile 15 - Zeile 31; Abbildungen * * Seite 9, Zeile 5 - Zeile 10 * * Seite 10, Zeile 29 - Seite 11, Zeile 12 * | 1,3 | |
| X | GB 1 588 936 A (SHOWA ALUMINIUM CO LTD) 29. April 1981 (1981-04-29) * Seite 1, Zeile 29 - Zeile 52 * | 1 | RECHERCHIERTE SACHGEBIETE (IPC) F24J |
| A | IMENES A G ET AL: "A new strategy for improved spectral performance in solar power plants", SOLAR ENERGY, PERGAMON PRESS. OXFORD, GB, Bd. 80, Nr. 10, 1. Oktober 2006 (2006-10-01), Seiten 1263-1269, XP025126820, ISSN: 0038-092X, DOI: 10.1016/J.SOLENER.2005.04.021 [gefunden am 2006-10-01] * Kapitel 2 * | 2 | |

-/--

Der vorliegende Recherchenbericht wurde für alle Patentansprüche erstellt

| Recherchenort | Abschlußdatum der Recherche | Prüfer |
|---|---|---|
| Den Haag | 18. Juni 2014 | Oliveira, Casimiro |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 14 16 4288

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,P | EP 2 239 086 A1 (ALANOD AL VEREDLUNG GMBH [DE]) 13. Oktober 2010 (2010-10-13) * das ganze Dokument * ----- | 1 | |
| A | EP 0 794 032 A1 (ALUSUISSE LONZA SERVICES AG [CH] ALCAN TECH & MAN AG [CH]) 10. September 1997 (1997-09-10) * das ganze Dokument * ----- | 1 | |
| A | EP 1 217 315 A1 (ALANOD ALUMINIUM VEREDLUNG GMB [DE]) 26. Juni 2002 (2002-06-26) * Absätze [0008] - [0017], [0028] - [0033]; Abbildungen * ----- | 1,5 | |
| A | DE 10 2006 056536 B3 (SCHOTT AG [DE]) 28. Februar 2008 (2008-02-28) * Zusammenfassung; Abbildungen * * Absätze [0005] - [0011], [0041] - [0052] * ----- | 6-13 | RECHERCHIERTE SACHGEBIETE (IPC) |
| A | CN 101 408 354 A (SHANDONG LINUO NEW MATERIAL CO [CN]) 15. April 2009 (2009-04-15) * Zusammenfassung; Abbildung 1; Beispiel 1 * ----- -/-- | 6-13 | |

Der vorliegende Recherchenbericht wurde für alle Patentansprüche erstellt

| Recherchenort | Abschlußdatum der Recherche | Prüfer |
|---|---|---|
| Den Haag | 18. Juni 2014 | Oliveira, Casimiro |

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 14 16 4288

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | C.E. Kennedy: "Review of Mid- to High-Temperature Solar Selective Absorber Materials", National Renewable Energy Laboratory , Juli 2002 (2002-07), XP007919405, Gefunden im Internet: URL:http://large.stanford.edu/publications/coal/references/troughnet/solarfield/docs/31267.pdf [gefunden am 2011-09-09] * das ganze Dokument * ----- | 6-13 | |
| A | US 5 523 132 A (ZHANG QI-CHU [AU] ET AL) 4. Juni 1996 (1996-06-04) * Spalte 3, Zeile 53 - Spalte 5, Zeile 15 * * Zusammenfassung * ----- | 6-13 | |
| A | DE 10 2004 010689 B3 (SCHOTT AG [DE]) 30. Juni 2005 (2005-06-30) * das ganze Dokument * ----- | 6-13 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| Den Haag | 18. Juni 2014 | Oliveira, Casimiro |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 16 4288

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-06-2014

| Im Recherchenbericht angeführtes Patentdokument | Datum der Veröffentlichung | Mitglied(er) der Patentfamilie | Datum der Veröffentlichung |
|---|---|---|---|
| US 4097311 A | 27-06-1978 | BE 846310 A1 | 17-03-1977 |
| | | JP S5238652 A | 25-03-1977 |
| | | JP S6014275 B2 | 12-04-1985 |
| | | TR 19434 A | 20-03-1979 |
| | | US 4097311 A | 27-06-1978 |
| | | ZA 7605670 A | 31-08-1977 |
| WO 9602798 A1 | 01-02-1996 | AU 3078495 A | 16-02-1996 |
| | | DE 4425140 C1 | 13-07-1995 |
| | | WO 9602798 A1 | 01-02-1996 |
| WO 2006072433 A1 | 13-07-2006 | DE 102005001435 A1 | 20-07-2006 |
| | | EP 1834137 A1 | 19-09-2007 |
| | | US 2008190414 A1 | 14-08-2008 |
| | | WO 2006072433 A1 | 13-07-2006 |
| GB 1588936 A | 29-04-1981 | AU 504928 B2 | 01-11-1979 |
| | | AU 2724677 A | 25-01-1979 |
| | | DE 2734032 A1 | 02-02-1978 |
| | | FR 2360051 A1 | 24-02-1978 |
| | | GB 1588936 A | 29-04-1981 |
| | | IT 1079399 B | 08-05-1985 |
| | | SE 7708650 A | 30-01-1978 |
| EP 2239086 A1 | 13-10-2010 | DE 102009016805 A1 | 21-10-2010 |
| | | EP 2239086 A1 | 13-10-2010 |
| | | US 2010261011 A1 | 14-10-2010 |
| EP 0794032 A1 | 10-09-1997 | AT 223783 T | 15-09-2002 |
| | | CH 690064 A5 | 14-04-2000 |
| | | CZ 9700674 A3 | 17-09-1997 |
| | | DE 59708153 D1 | 17-10-2002 |
| | | DK 0794032 T3 | 20-01-2003 |
| | | EP 0794032 A1 | 10-09-1997 |
| | | ES 2180016 T3 | 01-02-2003 |
| | | HU 9700552 A2 | 28-11-1997 |
| | | PL 318777 A1 | 15-09-1997 |
| | | PT 794032 E | 31-01-2003 |
| | | TR 9700164 A2 | 21-09-1997 |
| EP 1217315 A1 | 26-06-2002 | AT 288057 T | 15-02-2005 |
| | | CN 1368627 A | 11-09-2002 |
| | | DE 20021644 U1 | 02-05-2002 |
| | | DE 50105189 D1 | 03-03-2005 |
| | | DK 1217315 T3 | 09-05-2005 |
| | | EP 1217315 A1 | 26-06-2002 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT**
**ÜBER DIE EUROPÄISCHE PATENTANMELDUNG NR.**

EP 14 16 4288

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-06-2014

| Im Recherchenbericht angeführtes Patentdokument | Datum der Veröffentlichung | Mitglied(er) der Patentfamilie | | Datum der Veröffentlichung |
|---|---|---|---|---|
| | | ES | 2232557 T3 | 01-06-2005 |
| | | PT | 1217315 E | 31-03-2005 |
| | | US | 2002073988 A1 | 20-06-2002 |
| DE 102006056536 B3 | 28-02-2008 | CN | 101191677 A | 04-06-2008 |
| | | DE | 102006056536 B3 | 28-02-2008 |
| | | ES | 2317796 A1 | 16-04-2009 |
| | | US | 2008121225 A1 | 29-05-2008 |
| CN 101408354 A | 15-04-2009 | KEINE | | |
| US 5523132 A | 04-06-1996 | IN | 185567 A1 | 03-03-2001 |
| | | US | 5523132 A | 04-06-1996 |
| DE 102004010689 B3 | 30-06-2005 | CN | 1670446 A | 21-09-2005 |
| | | DE | 102004010689 B3 | 30-06-2005 |
| | | ES | 2289854 A1 | 01-02-2008 |
| | | IL | 167080 A | 13-04-2008 |
| | | US | 2005189525 A1 | 01-09-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9517533 A


**In der Beschreibung aufgeführte Nicht-Patentliteratur**

- **O.A. PANCHENKO et al.** *Probl. At. Sci. Technol. Ser.: Plasma Phys.,* 1999, vol. 132, 253
- Int Conf. Coat. Glass. **PULKER H.K. et al.** High-Perform. Coat. Transparent Syst. Large-Area High-Vol. Appl. Elsevier Science, 1999, 287
- **C. NUNES et al.** *Thin solid films,* 2003, vol. 442, 173-178
- **W. GRAF et al.** *schlugen in Journal of Non-Crystalline Solids,* 1997, vol. 218, 380-387
- **M. KÖHL ; M. HECK ; S. BRUNOLD ; U. FREI ; B. CARLSSON ; K. MÖLLER.** Advanced procedure for the assessment of the lifetime of solar absorber coatings. *Solar Energy Materials & Solar Cells,* 2004, vol. 84, 275-289
- **HOLLOWAY, P.H. ; SHANKER, K. ; PETTIT, R.B. ; SOWELL, R.R.** Oxidation of electrodeposited black chrome selective solar absorber films. *Thin Solid Films,* 1980, vol. 72, 121-128
- **HOLLOWAY, P.H. ; SHANKER, K. ; ALEXANDER, G.A. ; DE SEDAS, L.** Oxidation and diffusion in black chrome selective solar absorber coatings. *Thin Solid Films,* 1989, vol. 177, 95-105
- **CHRISTINA HILDEBRANDT.** Hochtemperaturstabile Absorberschichten für linear konzentrierende solarthermische Kraftwerke. *Dissertation,* 1989
- Laserlicht trifft Sonnenlicht. **DR. ULRICH DÜRR.** Mikroproduktion. Carl Hanser Verlag, Marz 2006, 28
- **E. HECHT.** Optik. Verlag Oldenburg, 2001
- Vakuumbeschichtung. VDI Verlag, 1993, vol. 5, 187-199